# EUROPÄISCHE PATENTANMELDUNG

(11) **EP 2 366 890 A1**
(43) Veröffentlichungstag der Anmeldung: **21.09.2011**
(21) Anmeldenummer: 11158172.4
(22) Anmeldetag: 15.03.2011
(51) Int. Cl.: F02N 15/00, H01R 39/00, H02K 23/00

(54) **Gewuchtete elektrische Maschine**

(30) Priorität: 19.03.2010 DE 102010003053
(71) Anmelder: Robert Bosch GmbH, 70442 Stuttgart (DE)
(72) Erfinder: Bayer, Michael, 71636 Ludwigsburg (DE); Siems, Hans-Dieter, 71735 Eberdingen (DE)

(57) **Zusammenfassung**

Die Erfindung bezieht sich auf eine elektrische Maschine, insbesondere eine Startervorrichtung (10) für eine Verbrennungskraftmaschine. Die elektrische Maschine umfasst einen Anker (37), dessen Ankerpaket (43) mit einem Kommutator (52) verbunden ist. Im Material (216) des Kommutators (52) sind Unwuchten ausgleichende Aussparungen (223, 225) ausgeführt oder in diesem sind Unwuchten ausgleichende Bauteile (226; 232) eingelassen. An einer Seite (212, 214) des Kommutators (52) können alternativ ebenfalls Auswuchtbereiche (218) vorgesehen sein.

## Beschreibung

### Stand der Technik

KR 2004 054 866 A bezieht sich auf eine elektrische Maschine mit statischer Wuchtung. Gemäß dieser Lösung sind im Rotor der elektrischen Maschine in bestimmten Umfangsabständen in Bezug auf den Rotor gesehen, eine Anzahl von Kurzschlusswicklungen 12 vorgesehen, in welchen sich ringförmig ausgebildete Nuten erstrecken. In diese ringförmig ausgebildeten Nuten, die an beiden Stirnseiten des Rotors ausgebildet sind, werden Wuchtstifte eingeführt, so dass eine statische Wuchtung des Rotors der elektrischen Maschine erreicht werden kann.

JP 2007 089 254 A bezieht sich auf eine elektrische Maschine, die einen dynamisch ausgewuchteten Kommutator aufweist. Gemäß dieser Lösung erfolgt ein spanabhebender Materialabtrag mittels einer Schneideinrichtung, durch die gezielt an bestimmten Stellen des Kommutators, entsprechend der zuvor gemessenen Unwucht, Material abgetragen wird.

Zum Starten von Verbrennungskraftmaschinen kommen hauptsächlich mechanisch kommutierte Gleichstrommotoren zum Einsatz. Bei diesen wird der Strom über einen oder mehrere Bürstenpaare über den Kommutator in die Ankerwicklung, die sich am Rotor befindet, eingeleitet. Die Bürsten bestehen zumeist aus einem Sinterwerkstoff, der hauptsächlich Kupfer und Graphitanteile enthält. Die Kohlebürsten sowie der Kommutator unterliegen in Betrieb einem zwangsläufig auftretenden Verschleiß. Startvorrichtungen sind typischerweise für einen kurzzeitigen Betrieb ausgelegt und normalerweise für 30000 bis 60000 Schaltzyklen geeignet.

Durch eine Gewichtsreduktion von Startern sowie durch eine Reduktion des Außendurchmessers und das Bestreben, eine Vielzahl von Schaltspielen zu gewährleisten, läuft die derzeitige Entwicklung dahingehend, die Ankerabmessungen möglichst ideal klein zu machen. Dabei wird der Durchmesser des Ankers verringert. Außerdem bestehen Entwicklungstendenzen dahingehend, die Kohlebürsten für neue Anwendungen, wie eine Start/Stop-Funktionalität, möglichst groß zu gestalten, dies bedeutet in diesem Fall, möglichst axial lange Bürsten zu gestalten. Das hat zur Folge, dass der Kommutator in axiale Richtung relativ großbauend ausgelegt werden muss.

Durch die derzeit erreichbare Massereduktion des Ankerpaketes und einer relativ großen axialen Länge des Kommutators kann es allerdings zu Problemen bezüglich des Auswuchtens von rotierenden Teilen, wie zum Beispiel dem Anker, kommen. Bei aus dem Stand der Technik bekannten Lösungen befinden sich auf dem Ankerpaket Wuchtmarken, die die komplette Unwucht des Ankers, d.h. des Rotors ausgleichen soll. Je weiter die Ursache der aufgetretenen Unwucht vom Ankerpaket entfernt ist, desto schwieriger wird es, die Unwucht mittels der mehr oder weniger in der axialen Mitte befindlichen Auswuchtebenen des Ankerpaketes auszugleichen. Zur minimalen Geräuschentwicklung und zur Belastung der Lager ist jedoch eine sehr gute Wuchtung notwendig. Das kann bei besonders kritischen Anwendungen dazu führen, dass die Wuchtgüte der einzelnen Komponenten nicht mehr ausreicht, um im zusammengebauten Zustand für einen jeden Anker ein adäquates Wuchtergebnis zu erhalten. Dies bedeutet in der Großserienfertigung die Gefahr einer Erhöhung des ausgebrachten Ausschussanteiles.

### Offenbarung der Erfindung

Der erfindungsgemäß vorgeschlagenen Lösung folgend, wird zum Erreichen einer sich um Null bewegenden Unwucht vorgeschlagen, den Kommutator durch Entfernen von Material bzw. auch durch Hinzufügen von "unwuchtigen Komponenten" die Unwucht der Komponente Kommutator nahezu auf den Wert Null zu bringen. Dadurch lässt sich bei der Fertigung des Rotors oder des Ankers der Beitrag der Unwucht, die auf den Kommutator zurückzuführen ist, in maximalem Umfang verringern. Dies wiederum ermöglicht, dass weniger Material vom Ankerpaket des Rotors abgetragen werden muss, um eine ideale Wuchtung hinsichtlich des dynamischen und statischen Wuchtanteils am Anker zu erreichen. Damit wiederum ist verbunden, dass die Ausschussfertigung, die auf Wuchtfehler zurückzuführen ist, in der Großserienfertigung solche Art gewuchteter elektrischer Maschinen erheblich herabgesetzt werden kann.

In einer ersten Ausführungsvariante des der Erfindung zugrunde liegenden Gedankens für die Herstellung von Kummutatoren mit kleinen Wuchtwerten im Bereich von Null kann an mehreren Stellen am Kommutator gezielt Material abgetragen werden. Dazu bietet sich zum einen die Fahnenseite des Kommutators an. Dort befindet sich relativ viel leitendes Material, bevorzugt Kupfer, und der Durchmesser des Kommutators ist auf der Fahnenseite maximal. Andererseits kann der Abtrag des leitenden Materials, bevorzugt Kupfer, an der Fahnenseite des Kommutators je nach Anwendung auch kritisch sein, da der Bereich, auf dem im Bereich des großen Außendurchmessers einer Fahnenseite des Kommutators Material abgetragen wird, für die Stromleitung besonders relevant ist und dort nicht in jedem Fall ausgewuchtet werden kann.

Alternativ zum gezielten Abtragen von Material an der Fahnenseite des Kommutators kann ein Kommutator auch dadurch auf eine möglichst geringe Unwucht nahe Null gebracht werden, indem versucht wird, zusätzliches Material am Kommutator anzubringen, dass dadurch die insgesamt resultierende Unwucht minimiert wird. Für das An- bzw. Aufbringen zusätzlichen Materials bieten sich die beiden Enden des Kommutators an, d.h. die bereits erwähnte Fahnenseite wie auch die dieser gegenüberliegende Stirnseite des Kommutators. Dort ist aufgrund der Einbauverhältnisse in der Startvorrichtung meist genügend Platz vorhanden, um zusätzliches Material gemäß der zweiten Ausführungsvariante der der Erfindung zugrunde liegenden Lösung anzubringen.

So lassen sich zum Beispiel gezielt Ringe anbringen, zum Beispiel aus einem Messingmaterial, die eine gezielt platzierte Unwucht aufweisen. Eine Unwucht aufweisende Scheibe kann zum Beispiel als ringförmiges Bauelement in Form einer Unterlegscheibe ausgebildet sein, die zum Beispiel an einer oder mehreren Stellen an ihrem Umfang in axiale Richtung erhaben vorstehende kreisförmige Bereiche aufweist. Um den Einfluss des Einbringens einer derartigen gezielten Unwucht abzuschätzen, kann mit einer Messingscheibe mit einer Dichte von 8,5 g/cm³, einer Fläche von ca. 4 x 4 mm und einer Tiefe von ca. 1 mm beim Anbringen auf einem radialen Abstand von ca. 15 mm von der Achse des Kommutators bereits 2 g/mm an statischer Unwucht beeinflusst werden. Da es sich bei den an den in elektrischen Maschinen eingesetzten Kommutatoren meist um statische Unwuchten im Bereich von kleiner 10 g/mm handelt, kann somit bereits leicht die Hälfte der ursprünglichen Unwucht reduziert werden. In vorteilhafter Weise können auch Schrägen zur Fixierung des eingebrachten Ringes, der zum Beispiel aus Messingmaterial gefertigt sein kann, ausgebildet werden, um einen maximalen axialen Halt und auch eine Absicherung gegen hohe Rotationsgeschwindigkeiten zu erzielen.

An der Stirnseite des Kommutators, d.h. auf der der Fahnenseite gegenüberliegenden Seite des Kommutators, ist ein Anbringen einer Anlaufscheibe gängige Praxis. Aus diesem Grund wird im Kommutator bereits ein gewisser Platz vorgehalten, um eine zusätzliche Scheibe einzusetzen. Wird die Anlaufscheibe in ihrer Auslegung derart verändert, dass eine ideale Fixierung des zusätzlichen Ringes erreicht werden kann, so muss nicht einmal das grundsätzliche Design geändert werden. Die Einführung eines Ringes mittels einer Schrägung kann sowohl auf der Fahnenseite als auch auf der Stirnseite des Kommutators zu einer axialen Stabilität führen. Durch eine Schräge kann die zusätzlich angebrachte Unwucht über eine leichte Biegung eingeführt werden und bleibt dann axial am Kommutator fixiert.

Anhand der Zeichnung wird die Erfindung nahestehend eingehender beschrieben.

Es zeigt:
- Figur 1: einen Längsschnitt durch eine elektrische Maschine,
- Figur 2: die Darstellung eines Kommutators mit Kommutatorkern und am Umfang des Kommutators ausgebildetem elektrisch leitfähigen Material,
- Figur 3: eine Ausführungsvariante des Kommutators mit Aussparungen auf Fahnenseite und Stirnseite,
- Figur 4: die Draufsicht auf ein eine Unwucht aufweisendes zusätzliches Bauteil,
- Figur 4.1: das in Figur 4 dargestellte Bauteil in der Seitenansicht,
- Figur 4.2: Ausführungsvarianten der Geometrien erhabend hervorstehender Flächenbereiche, die eine Unwucht darstellen,
- Figur 5: einen Kommutator mit einer an einer Stirnseite des Kommutators fixierten Anlaufscheibe,
- Figur 5.1: eine Detaildarstellung der Anlaufscheibe gemäß Figur 5,
- Figur 6: die Darstellung eines Kommutators mit an der Fahnenseite ausgebildeter Aussparung,
- Figur 6.1: die Darstellung der mindestens eine Schrägfläche aufweisenden Aussparung an der Fahnenseite des Kommutators in vergrößertem Maßstab im Vergleich zu Figur 6 und
- Figur 6.2: ein Ausführungsbeispiel einer eine Unwucht als erhabener Flächenbereich aufweisenden Scheibe.

### Ausführungsformen der Erfindung

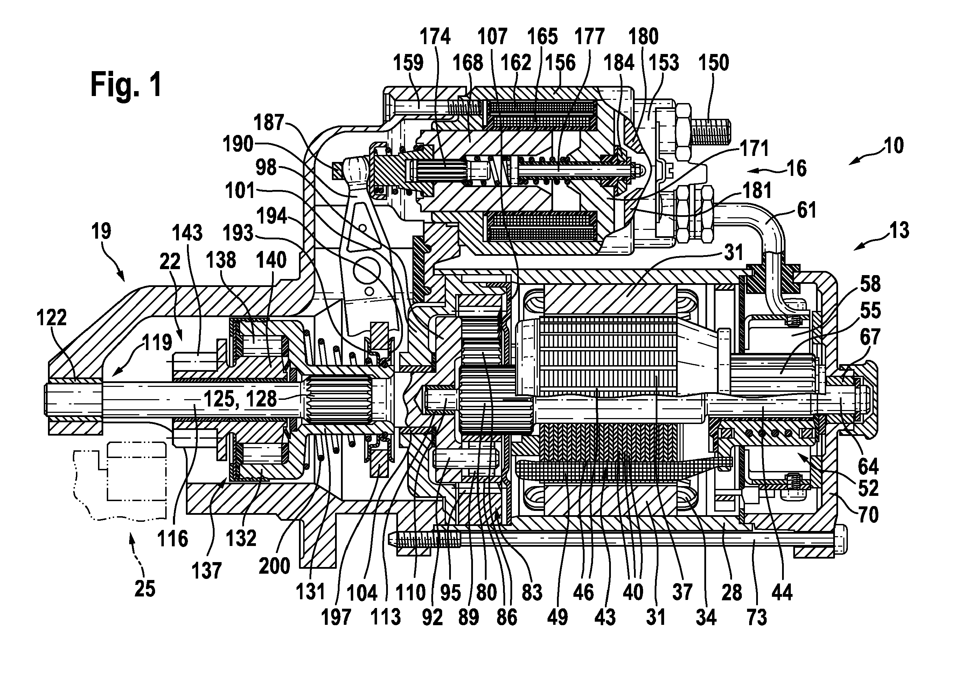

Figur 1 zeigt eine Startvorrichtung in einem Längsschnitt.

In der Figur 1 ist eine Startvorrichtung 10 dargestellt. Diese Startvorrichtung 10 weist beispielsweise einen Startermotor 13 und ein Einrückrelais 16 auf. Der Startermotor 13 und das Einrückrelais 16 sind an einem gemeinsamen Antriebslagerschild 19 befestigt. Der Startermotor 13 hat die Aufgabe, ein Andrehritzel 22 anzutreiben, wenn dieses im Zahnkranz 25 der in Figur 1 nicht dargestellten Brennkraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 aufgenommene Ankerwicklung 49 aufweist. Das Ankerpaket 43 ist auf eine Antriebswelle 44 aufgepresst. An dem dem Andrehritzel 22 abgewandten Ende der Antriebswelle 44 ist des Weiteren ein Kommutator 52 angebracht, der unter anderem aus einzelnen Kommutatorlamellen 55 aufgebaut ist. Die Kommutatorlamellen 55 sind bekannterweise mit der Ankerwicklung 49 derartig elektrisch verbunden, dass sich bei Bestromung der Kommutatorlamellen 55 durch Kohlebürsten 58 eine Drehbewegung des Ankers 37 innerhalb des Polrohres 28 einstellt. Eine zwischen dem Einrückrelais 16 und dem Startermotor 13 angeordnete Stromzuführung 61 versorgt im Einschaltzustand sowohl die Kohlebürsten 58 als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatordeckel 70 wiederum wird mittels Zugankern 73, die über den Umfang des Polrohres 28 verteilt angeordnet sind, so zum Beispiel Schrauben, beispielsweise 2, 3 oder 4 Stück, im Antriebslagerschild 19 befestigt. Es stützt sich dabei das Polrohr 28 am Antriebslagerschild 19 ab, und der Kommutatorlagerdeckel 70 am Polrohr 28.

In Antriebsrichtung gesehen, schließt sich an den Anker 37 ein Sonnenrad 80 an, welches Teil eines Umlaufgetriebes, so zum Beispiel eines Planetengetriebes 83, ist. Das Sonnenrad 80 ist von mehreren Planetenrädern 86 umgeben, üblicherweise drei Planetenräder 86, die mittels Wälzlagern 89 auf Achszapfen 92 abgestützt sind. Die Planetenräder 86 wälzen in einem Hohlrad 95 ab, das im Polrohr 28 an seiner Außenseite gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98 als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 verschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer Geradverzahnung 125 (Innenverzahnung), die Teil einer Wellen-Nabe-Verbindung ist. Diese Wellen-Nabe-Verbindung 128 ermöglicht in diesem Falle das axial geradlinige Gleiten eines Mitnehmers 131. Bei diesem Mitnehmer 131 handelt es sich um einen hülsenförmigen Fortsatz, der einstückig mit einem topfförmigen Außenring 132 des Freilaufs 137 ist. Der Freilauf 137 (Richtgesperre) besteht des Weiteren aus dem Innenring 140, der radial innerhalb des Außenringes 132 angeordnet ist. Zwischen dem Innenring 140 und dem Außenring 132 sind Klemmkörper 138 angeordnet. Diese Klemmkörper 138 verhindern in Zusammenwirkung mit dem Innenring 140 und dem Außenring 132 eine Relativbewegung zwischen dem Außenring 132 und dem Innenring 140 in eine zweite Richtung. Mit anderen Worten: Der Freilauf 137 ermöglicht eine Relativbewegung zwischen dem Innenring 140 und dem Außenring 132 nur in eine Richtung. In diesem Ausführungsbeispiel ist der Innenring 140 einstückig mit dem Andrehritzel 22 und dessen Schrägverzahnung 143 (Außenschrägverzahnung) ausgeführt.

Der Vollständigkeit halber sei hier noch auf den Einspurmechanismus eingegangen. Das Einrückrelais 16 weist einen Bolzen 150 auf, der einen elektrischen Kontakt darstellt und der an dem Pluspol einer elektrischen Starterbatterie, die in der Darstellung gemäß Figur 1 nicht gezeigt ist, angeschlossen ist. Dieser Bolzen 150 ist durch einen Relaisdeckel 153 hindurchgeführt. Der Relaisdeckel 153 schließt ein Relaisgehäuse 156 ab, das mittels mehrerer Befestigungselemente 159, so zum Beispiel Schrauben, am Antriebslagerschild 19 befestigt ist. Im Einrückrelais 16 ist weiterhin eine Einzugswicklung 162 und eine Haltewicklung 165 angeordnet. Die Einzugswicklung 162 und die Haltewicklung 165 bewirken beide, jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 bewegt wird. Mit dieser Bewegung der Schubstange 174 zum Schaltbolzen 177 wird dieser aus seiner Ruhelage in Richtung zu zwei Kontakten 180 und 181 bewegt, so dass eine am zu den Kontakten 180 und 181 am Ende des Schaltbolzens 177 angebrachte Kontaktbrücke 184 die beiden Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Dabei wird der Startermotor 13 bestromt.

Das Einrückrelais 16 bzw. der Anker 168 hat darüber hinaus auch die Aufgabe, mit einem Zugelement 187 einen im Antriebslagerschild 19 drehbeweglich angeordneten Hebel zu bewegen. Dieser Hebel 190, üblicherweise als Gabelhebel ausgeführt, umgreift mit zwei hier nicht näher dargestellten "Zinken" zwei Scheiben 193 und 194 an deren Außenumfang, um einen zwischen diesen eingeklemmten Mitnehmerringen 197 zum Freilauf 137 hin, gegen den Widerstand der Feder 200 zu bewegen und dadurch das Andrehritzel 22 in den Zahnkranz 25 der in Figur 1 nicht dargestellten Brennkraftmaschine einzuspuren.

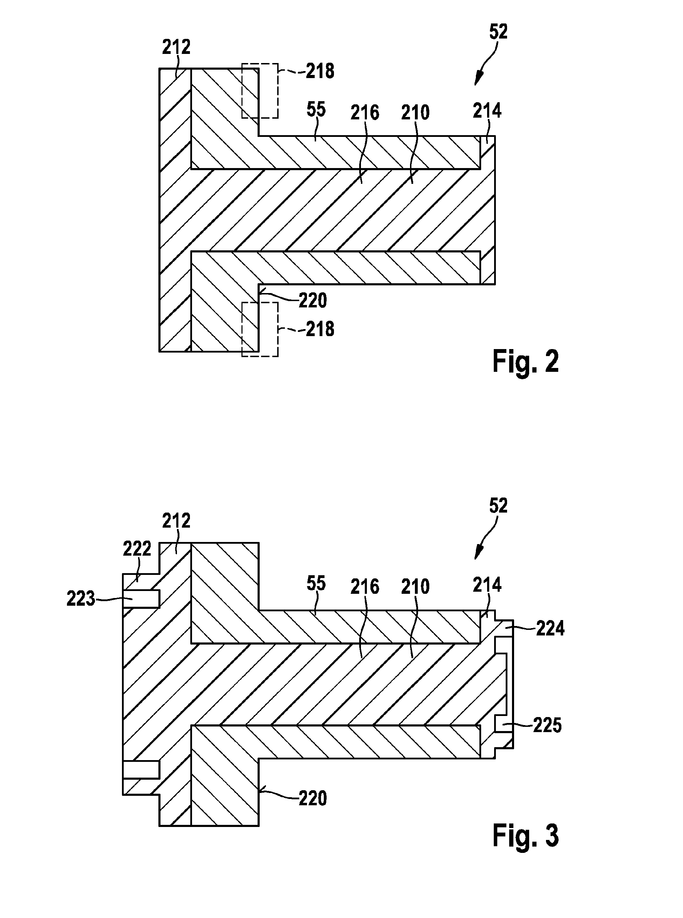

Der Darstellung gemäß Figur 2 ist ein Kommutator der elektrischen Maschine gemäß Figur 1 zu entnehmen.

Aus der Darstellung gemäß Figur 2 geht hervor, dass der Kommutator 52 einen Kommutatorkern 210 umfasst, der aus einer Pressmasse, wie zum Beispiel einem Duroplasten 216 gefertigt sein kann. An der Außenmantelfläche des Kommutators 52 gemäß der Darstellung in Figur 2 befinden sich die Kommutatorlamellen 55, die aus elektrisch leitfähigem Material, bevorzugt Kupfer, gefertigt werden. Die Kommutatorlamellen 55 gemäß der Darstellung in Figur 2 werden durch stirnseitige Scheiben, so zum Beispiel eine Fahnenseite 212 und eine Stirnseite 214 des Kommutatorkerns 210 in axiale Richtung fixiert. Wie aus der Darstellung gemäß Figur 2 hervorgeht, fasst insbesondere die einen größeren Durchmesser aufweisende Fahnenseite 212 des Kommutators 52 der der Fahnenseite 212 abgewandten Seite große Auswuchtbereiche 218. An der rückwärtigen Seite 220 der Fahnenseite 212 kann somit innerhalb der gestrichelt angedeuteten Auswuchtbereiche 218 ein Materialabtrag erfolgen, um entsprechend des Umwuchtzustandes des Kommutators 52 dessen statische und dynamische Auswuchtung durch Materialabtrag an der rückwärtigen Seite 220 der Fahnenseite 212 innerhalb der Auswuchtbereiche 218 zu realisieren.

Es sei darauf hingewiesen, dass der Abtrag des elektrisch leitenden Materials, insbesondere Kupfer, an dieser Stelle, d.h. auf der rückwärtigen Seite 220 der Fahnenseite 212 je nach Anwendung auch kritisch sein kann. Der dargestellte Bereich ist für die Stromleitung relevant, so dass eine Beseitigung von Unwuchten durch Materialabtrag des elektrisch leitfähigen Materials innerhalb des Auswuchtbereichs 218 nicht in jedem Fall realisiert werden kann, um die Stromleitung nicht zu beeinträchtigen.

Der Darstellung gemäß Figur 3 ist ein weiteres Ausführungsbeispiel der erfindungsgemäß vorgeschlagenen Lösung zu entnehmen. Auch in der Ausführungsvariante gemäß Figur 3 umfasst der Kommutator 53 die Kommutatorlamellen 55 am Umfang eines Kommutatorkerns 210, der als Pressmasse 216 aus einem Duroplast ausgebildet ist.

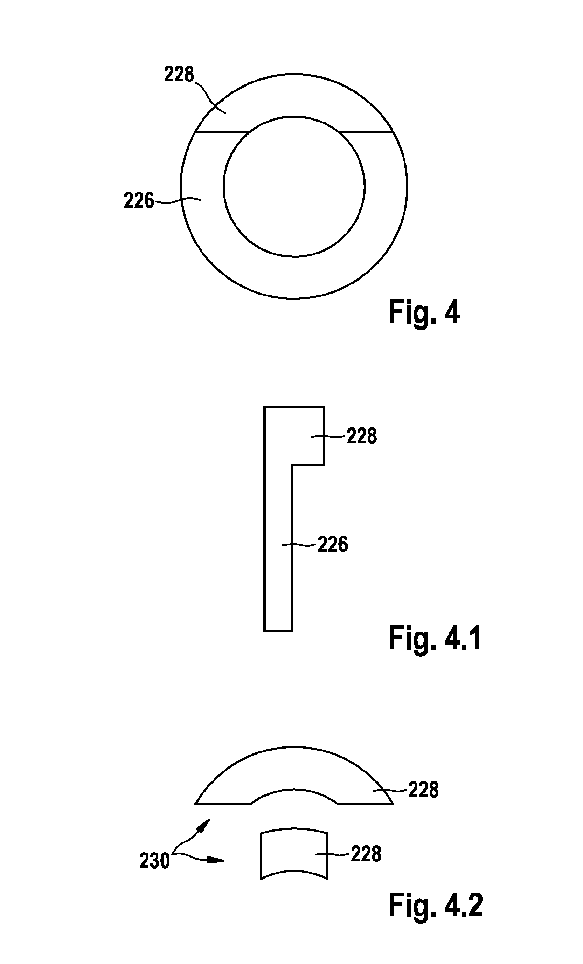

Im Unterschied zur Ausführungsvariante gemäß Figur 2, bei der ein Materialabtrag am elektrisch leitfähigen Material der Kommutatorlamellen 55 erfolgt, befinden sich an der Fahnenseite 212 und der Stirnseite 214 jeweils außenliegend ringförmig sich in Umfangsrichtung erstreckende Aussparungen 223 bzw. 225. Diese bevorzugt in Ringform ausgebildeten Aussparungen 223, 225 an der Fahnenseite 212 und der Stirnseite 214 bilden aufgrund des dort erfolgten Materialabtrags, der fertigungstechnisch sehr einfach im Duroplasten 216 realisierbar ist, jeweils Ringe 222, 224. Es besteht nun die Möglichkeit, in die an der Fahnenseite 212 bzw. der Stirnseite 214 ausgebildeten, sich in Ringform erstreckenden Aussparungen 223 bzw. 225 ihrerseits mindestens eine Unwucht aufweisende zusätzliche Bauteile, wie zum Beispiel die in den Figuren 4, 4.1 und 4.2 dargestellte verdrehsicher ausgeführte Wuchtscheibe 226, einzubringen oder die Aussparungen 223, 225 bereits bei der Fertigung so zu dimensionieren, dass sie ihrerseits frei bleiben können und allein durch ihre Formgebung, Tiefe und Geometrie eine statische und dynamische Wuchtung des Kommutators 52 erlauben, ohne dass in die Aussparungen 223 bzw. 225 ihrerseits eine Unwucht aufweisende zusätzliche Bauteile, wie zum Beispiel die bereits erwähnte verdrehsicher ausgeführte Wuchtscheibe 226, einzulassen wären. Die Verdrehsicherung kann zum Beispiel dadurch ausgebildet werden, dass äquidistant eingefügte Nuten in der verdrehsicher ausgebildeten Wuchtscheibe 226 realisiert werden. In diesem Fall wird eine bestimmte Anzahl von Wuchtbereiche vorgegeben, die jeweils mit Material gefüllt werden können. Zum Beispiel kann die gleiche Nutteilung wie beim Kommutator 52 verwenden werden, so zum Beispiel 28 Nuten. Neben der Darstellung eines Hinterschnittes als radiale und axial wirkende Fixierung, kann auch eine Pressung im vorgesehenen Freiraum vorgesehen sein. Überdem besteht die Möglichkeit einer axialen Fixierung auf der Stirnseite mittels nachträglich eingeführter Bauteile. So wird zum Beispiel eine Anlaufscheibe 232 in der Regel durch Verpressung verbaut.

Um den Einfluss des Einbringens einer gezielten Unwucht abzuschätzen, kann zum Beispiel eine Wuchtscheibe 226, so zum Beispiel ausgebildet als Messingscheibe, gemäß den Darstellungen in den Figuren 4, 4.1 und 4.2 eingesetzt werden. Ist die Wuchtscheibe 226 in einer Dichte von ca. 8,5 g/cm³ und die Unwucht in einer Fläche von ca. 4 x 4 mm näherungsweise punktförmig ausgebildet und weist eine Tiefe von ca. 1 mm auf, so kann beim Anbringen auf einem radialen Abstand von ca. 15 mm in Bezug auf die Symmetrieachse des Kommutatorkerns 218 bereits 2 g/mm an statischer Unwucht beeinflusst werden. Da es sich bei den in elektrischen Maschinen eingesetzten Kommutatoren 52 meist um statische Unwuchten im Bereich von < 10 g/mm handelt, kann leicht die Hälfte der ursprünglich vorhandenen Unwucht durch diese einfache Maßnahme reduziert werden.

Wird die Unwuchtscheibe 226 in eine der Aussparungen - entsprechende komplementäre Geometrien vorausgesetzt - eingesetzt, so ist zum Beispiel der Figu-rensequenz der Figuren 4, 4.1 und 4.2 zu entnehmen, dass die Unwucht einer derartigen Wuchtscheibe 226 zum Beispiel durch einen erhabenen Flächenbereich 228 dargestellt sein kann. Aus der Darstellung gemäß Figur 4.2 geht hervor, dass dieser erhaben ausgebildete Flächenbereich 228 am Umfang der Wuchtscheibe 226 als Kreissegment oder in Punktform mit den vorstehend genannten Abmessungen 4 x 4 mm bei 1 mm Tiefe ausgebildet sein kann. Die Wuchtscheibe 226 kann selbstverständlich auch mehr als eine Unwucht, d.h. mehr als einen erhaben hervorstehenden Flächenbereich 228 in den unterschiedlichsten Geometrien 230 aufweisen. Dies ist abhängig vom anwendungsspezifischen Einsatzfall.

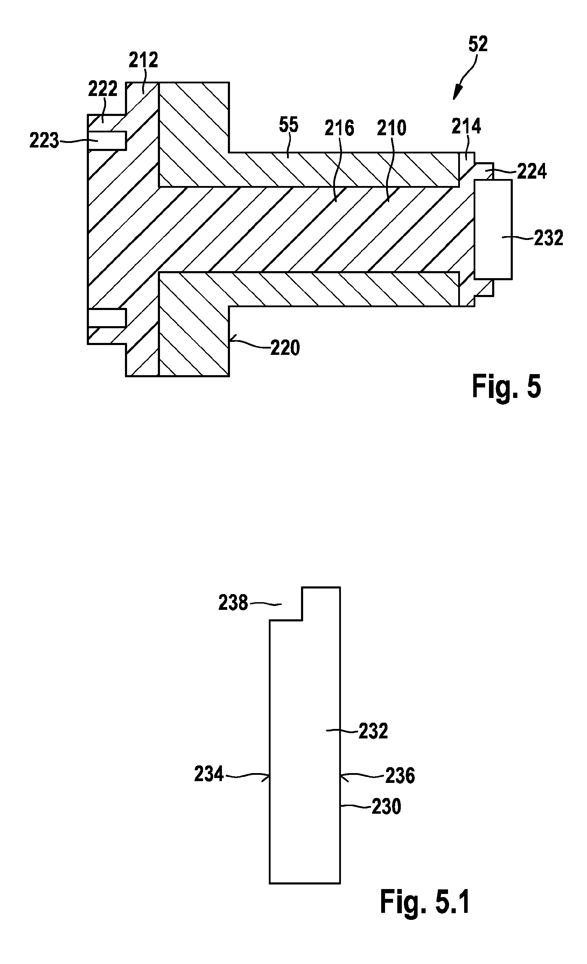

Der Darstellung gemäß Figur 5 ist zu entnehmen, dass bei der dort dargestellten Ausführungsvariante des Kommutators 52 an der Stirnseite 214 innerhalb des Rings 224, der im Material 216 des Kommutatorkerns 210 ausgebildet ist, eine Anlaufscheibe 232 formschlüssig eingelassen ist. Das Einlassen einer derartigen Anlaufscheibe 232 an der Stirnseite 215 des Kommutators 52 ist ohne Weiteres möglich, da der Kommutator 52 noch einen dementsprechenden Platz aufweist, um die Anlaufscheibe einzusetzen. Zum Einsatz am zu wuchtenden Kommutator 52 sind verschiedene Geometrien der Anlaufscheibe gemäß der schematischen Darstellung in Figur 5 möglich. So ist zum Beispiel in Figur 5.1 eine Geometrie einer Anlaufscheibe 232 dargestellt, die mit einer Innenseite 234 an der Stirnseite 214 des Kommutatorkerns 210 anliegt. Während eine Außenseite 236 der Anlaufscheibe 232 im Wesentlichen plan ausgebildet ist, so befindet sich an der der Stirnseite 214 des Kommutatorkerns 210 gegenüberliegenden Innenseite 234 der Anlaufscheibe 232 eine in der Darstellung gemäß Figur 5.1 rechteckförmig ausgebildete Aussparung 238. Neben der in Figur 5 dargestellten Geometrie der Aussparung 238 als Quadrat können auch andere Geometrien, wie zum Beispiel eine kreisförmige Aussparung 238 oder dergleichen mehr, vorgesehen werden. Die Größe der Aussparung 238 richtet sich nach der auswuchtenden Unwucht, die am Kommutator 52, im Wesentlichen die Kommutatorlamellen 55 aus elektrisch leitfähigem Material und dem Kommutatorkern 210 aus Pressmasse 216 umfassend, vorliegt. Wie aus der Darstellung gemäß Figur 5 hervorgeht, kann die Anlaufscheibe 232 - gleichwertiger Geometrie - einfach in den Ring 224 an der Stirnseite 214 des Kommutatorkerns 210 eingepasst werden.

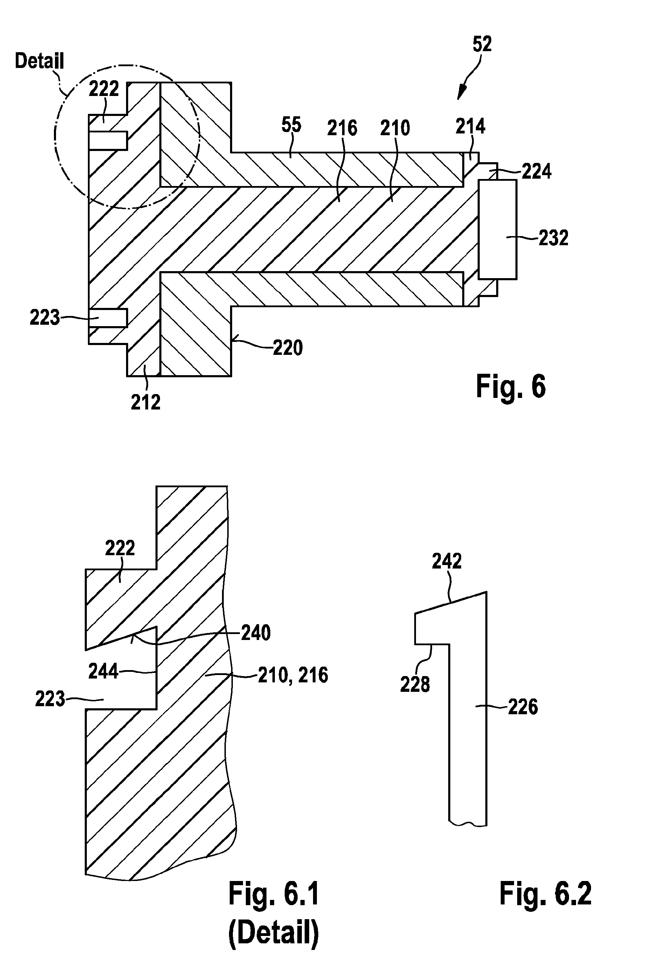

Aus Figur 6 geht ein weiteres Ausführungsbeispiel des erfindungsgemäß vorgeschlagenen Kommutators hervor.

Analog zur Ausführungsvariante gemäß Figur 5 befindet sich an der Stirnseite 214 des Kommutatorkerns 210 aus Pressmasse 216 die Anlaufscheibe 232. Diese ist analog zur Ausführungsvariante gemäß Figur 5 durch den Ring 224 am Kommutatorkern 210 im Bereich der Stirnseite 214 fixiert.

Auf der Fahnenseite 212 des Kommutatorkerns 210 des Kommutators 52 befindet sich - vergleiche Ausführungsvariante gemäß Figur 3 - ebenfalls die sich bevorzugt in Ringform in Umfangsrichtung erstreckende Aussparung 223. Diese wird einerseits von der Pressmasse 216 des Kommutatorkerns 210 und andererseits vom Ring 222 begrenzt. Aus der Detaildarstellung gemäß Figur 6.1 geht hervor, dass die Aussparung 223 zumindest von einer Schrägfläche 240 begrenzt ist. In Bezug auf einen Boden 244 der bevorzugt in Ringform im Material 216 des Kommutatorkerns 210 ausgebildeten Aussparung 223 bildet diese Schrägfläche 240 einen Hinterschnitt. Wird in die gemäß Figur 6.1 konfigurierte, bevorzugt in Ringform ausgeführte Aussparung 223 die in Figur 6.2 dargestellte Wuchtscheibe 226 eingesetzt, so ist dieses zusätzliche Bauteil durch die Schrägfläche 240 fixiert, so dass sich ein maximaler axialer Halt sowie eine Absicherung gegen hohe Rotationsgeschwindigkeiten des Kommutators 52 erzielen lässt. Die Schrägfläche 240, die in der Aussparung 223 gemäß der Darstellung in Figur 6.1 auf der Fahnenseite 212 des Kommutators 52 ausgebildet ist, kann selbstverständlich auch in der Aussparung 225 gemäß der Darstellung in Figur 3 auf der Stirnseite 214 des Kommutators 52 ausgebildet werden. Wird das zusätzlich ein Unwucht aufweisende Bauteil 226, vergleiche Darstellung gemäß Figur 6.2, welches eine Außenschrägung 242 aufweist, in die Aussparung 223 gemäß der Konfiguration in Figur 6.1 eingeführt, wird der Ring 222 in radiale Richtung leicht verformt und die Wuchtscheibe 226 schnappt nach Art einer Verriegelung in die in Ringform ausgebildete Aussparung 223 - sei es auf der Fahnenseite 212, sei es auf der Stirnseite 214 - des Kommutatorkerns 210 des Kommutators 52 ein.

Aus der Detaildarstellung gemäß Figur 6.2 geht hervor, dass der Außenumfang des als Wuchtscheibe 226 ausgebildeten zusätzlichen Bauteils mit der Außenschräge 242 versehen ist. Die Außenschräge 242 der Wuchtscheibe 226 ist komplementär zur Schrägfläche 240, die die Aussparungen 223 auf der Fahnenseite 212 bzw. die Aussparung 225 auf der Stirnseite 214 begrenzt, ausgebildet. Für den als erhabenen Flächenbereich 228 an der Wuchtscheibe 226 ausgebildeten Bereich gilt, dass dieser, wie vorstehend bereits erwähnt, zum Beispiel mit einer Fläche von 4 x 4 mm und einem erhabenen Überstand von 1 mm und mehr ausgebildet sein kann, so dass durch die in Figur 6.2 dargestellte Wuchtscheibe, die selbst eine definierte Unwucht aufweist, nach Montage am Kommutator 52 dessen Unwucht, sei es dessen statische, sei es dessen dynamische Unwucht, kompensiert werden kann.

## Patentansprüche

1. Elektrische Maschine, insbesondere Startervorrichtung (10) für eine Verbrennungskraftmaschine, mit einem Anker (37), dessen Ankerpakete (43) mit einem Kommutator (52) verbunden sind, **dadurch gekennzeichnet, dass** im Material (216) des Kommutators (52) mindestens eine Unwuchten ausgleichende Aussparung (223, 225) ausgeführt oder in das Material (216) Unwuchten ausgleichende Bauteile (226, 232) eingelassen sind, oder an einer Seite (212, 214) des Kommutators (52) Auswuchtbereiche (218) ausgebildet sind.

2. Elektrische Maschine gemäß Anspruch 1, **dadurch gekennzeichnet, dass** der Kommutator (52) Kommutatorlamellen (55) mit elektrisch leitenden Bereichen aufweist, sowie einen Kommutatorkern (210), der aus einer Pressmasse (216), bevorzugt einem Duroplasten, gefertigt ist.

3. Elektrische Maschine gemäß einem der vorhergehenden Ansprüche, **dadurch gekennzeichnet, dass** im Material (216) des Kommutatorkerns (210) an zumindest einer Stirnseite (212, 214) Aussparungen (223, 225) ausgeführt sind, die frei bleiben oder Unwuchten ausgleichende Bauteile (226, 232) aufnehmen.

4. Elektrische Maschine gemäß dem vorhergehenden Anspruch, **dadurch gekennzeichnet, dass** die Aussparungen (223, 225) an einer Fahnenseite (212) und/oder einer Stirnseite (214) des Kommutators (52) ausgeführt sind.

5. Elektrische Maschine gemäß einem der vorhergehenden Ansprüche, **dadurch gekennzeichnet, dass** die Aussparungen (223, 225) in Umfangsrichtung unterbrochen oder kontinuierlich, insbesondere in Ringform, ausgeführt sind.

6. Elektrische Maschine gemäß einem der vorhergehenden Ansprüche, **dadurch gekennzeichnet, dass** am Kommutator (52), insbesondere am Kommutatorkern (210) Bauteile (226, 232) aufgenommen sind, die mindestens eine Unwucht (228, 238) aufweisen.

7. Elektrische Maschine gemäß dem vorhergehenden Anspruch, **dadurch gekennzeichnet, dass** die Unwucht als erhabener Flächenbereich (228) einer Wuchtscheibe (226) oder als Aussparung (238) in einer Anlaufscheibe (232) ausgeführt ist.

8. Elektrische Maschine gemäß dem vorhergehenden Anspruch, **dadurch gekennzeichnet, dass** der erhabene Flächenbereich (228) in Punktform oder einer Geometrie (230) eines Kreissegmentes ausgeführt ist.

9. Elektrische Maschine gemäß einem der vorhergehenden Ansprüche, **dadurch gekennzeichnet, dass** die Aussparung (223, 225) durch mindestens eine Schrägfläche (240) begrenzt ist, die in Bezug auf die Aussparung (223, 225) einen Hinterschnitt darstellt.

10. Elektrische Maschine gemäß dem vorhergehenden Anspruch, **dadurch gekennzeichnet, dass** die Unwuchten ausgleichenden Bauteile (226, 232) Anlageschrägen (242) aufweisen, die zur Schrägfläche (240) der mindestens einen Aussparung (223, 225) komplementär ausgebildet sind.
